# EUROPÄISCHE PATENTANMELDUNG

(11) **EP 3 748 226 A1**
(43) Veröffentlichungstag der Anmeldung: **09.12.2020**
(21) Anmeldenummer: 20176342.2
(22) Anmeldetag: 25.05.2020
(51) Int. Cl.: F21V 7/00, F21V 7/04, F21Y 115/10

(54) **REFLEKTOR FÜR EINE LEUCHTE**

(30) Priorität: 06.06.2019 DE 102019115344
(71) Anmelder: Bartenbach Holding GmbH, 6071 Aldrans (AT)
(72) Erfinder: Föger, Daniel, 6424 Silz (AT); Reisecker, Christian, 6166 Fulpmes (AT)
(74) Vertreter: Thoma, Michael

(57) **Zusammenfassung**

Die vorliegende Erfindung betrifft allgemein Leuchten mit einem Reflektor zum Umlenken des von zumindest einer Lichtquelle abgegebenen Lichts. Die Erfindung betrifft dabei insbesondere den Reflektor, der eine Reflektorschale mit einer reflektierend ausgebildeten Reflektorfläche zum Umlenken des von der zumindest einen Lichtquelle der Leuchte abgegebenen Lichts aufweist, wobei die genannte reflektierend ausgebildete Reflektorfläche facettiert ausgebildet ist. Erfindungsgemäß zeichnet sich der Reflektor dadurch aus, dass die Reflektorschale eine transparente Schalenschicht aufweist, die eine glatte, facettenfreie, der Lichtquelle zugewandte und/oder vom umzulenkenden Licht bestrahlte Vorderseite besitzt, die gleichzeitig eine Lichteintritts- und -austrittsfläche des Reflektors bildet, und auf ihrer gegenüberliegenden Rückseite mit der facettierten, reflektierend ausgebildeten Reflektorfläche versehen ist, deren Facetten mit Facettenhauptachsen zumindest im Wesentlichen senkrecht zur glatten Vorderseite ausgerichtet sind.

## Beschreibung

Die vorliegende Erfindung betrifft allgemein Leuchten mit einem Reflektor zum Umlenken des von zumindest einer Lichtquelle abgegebenen Lichts. Die Erfindung betrifft dabei insbesondere den Reflektor, der eine Reflektorschale mit einer reflektierend ausgebildeten Reflektorfläche zum Umlenken des von der zumindest einen Lichtquelle der Leuchte abgegebenen Lichts aufweist, wobei die genannte reflektierend ausgebildete Reflektorfläche facettiert ausgebildet ist.

Bei Reflektoren ist es bekannt, die verspiegelte bzw. reflektierend ausgebildete Reflektorfläche mit einem Facettenmuster zu versehen. Dabei wird die von der Grundform her oft gewölbte, an sich harmonisch gekrümmte Reflektorfläche mit einer Vielzahl von Facetten versehen, die im Vergleich zur gesamten Reflektorfläche - bei Betrachtung einer einzelnen Facette - sehr klein ausgebildet sind, sodass die insgesamt gewölbte Reflektorfläche eine Vielzahl kleiner Abflachungen bzw. kleiner Dellen bekommt. Beispielsweise können auch bei kleineren Reflektoren mehr als 25 oder mehr als 50 oder auch mehr als 100 solcher Facetten vorgesehen sein und zusammen die Reflektorfläche bilden, wobei die genannten Facetten meist direkt aneinander liegend angeordnet sind. Durch eine solche Facettenstruktur kann die lichttechnische Abstrahlcharakteristik des Reflektors verbessert werden, beispielsweise wird zum einen die Empfindlichkeit gegenüber Lagetoleranzen zum Mittelpunkt der Lichtquelle bzw. zur Position eines vor- oder nachgeschalteten weiteren Optikelements wie beispielsweise einer Linse reduziert, sodass die gewünschte Abstrahlcharakteristik auch dann im Wesentlichen erzielt werden kann, wenn ein Fluchtungsfehler auftritt. Zum anderen kommt es zu einer gewissen Durchmischung der an den Facetten umgelenkten Lichtstrahlen, sodass die Lichtverteilung des vom Reflektor abgestrahlten Lichtbündels insgesamt harmonischer ist.

Solche facettierten Reflektorflächen sind jedoch nicht ganz einfach zu fertigen und relativ empfindlich bei der Reinigung. Üblicherweise wird eine spiegelnde oder hoch reflektierende Beschichtung auf die Oberfläche der Reflektorschale aufgebracht, in der die Facettierung eingeprägt ist. Werden die Reflektoren nicht durch Glas- oder Kunststoffabdeckungen verschlossen, kommt es zu Verschmutzungen der facettierten Reflektoroberfläche. Beim Reinigen beispielsweise mit einem Tuch oder zusätzlich Reinigungsmitteln wetzt sich die Reflektorbeschichtung an den rippenartigen Übergängen zwischen den Facetten leicht ab. Zudem kann es auch beim Auswechseln der Leuchtmittel leicht zu Beschädigungen der empfindlichen Reflektoroberfläche kommen, wenn beim Einfädeln des Leuchtmittels von vorne her mit dessen Steckkontakten oder Sockelabschnitten über die Reflektoroberfläche geschrammt wird.

Zum anderen ist auch die Fertigung facettierter Reflektorflächen per se nicht trivial. Insbesondere ist bei tiefen Reflektorschalen das Aufbringen der Verspiegelung schwierig, da mit den die Verspiegelung aufbringenden Werkzeugen nicht ohne weiteres tief genug in die Reflektorschalen hineingefahren werden kann. Zum anderen kann es auch schon schwierig sein, die Spritzgusswerkzeuge selbst zu entformen, da je nach Form der Reflektorschale die Facetten insbesondere an steiler angestellten Abschnitten der konkaven Schale zu kleinen Hinterschneidungen führen können.

Um die Empfindlichkeit der Reflektoroberfläche beim Reinigen und die Schwierigkeiten beim Aufbringen der Verspiegelung zumindest abzumildern, wurde bereits angedacht, die reflektierende Beschichtung auf die Rückseite der Reflektorschale zu verlegen und die Reflektorschale transparent auszubilden, so dass das zu reflektierende Licht durch die transparente Schalenschicht auf die reflektierende Rückseite gelangen und von dort zurückgeworfen werden kann, vgl. beispielsweise US 2004/0141323 A1. Hierdurch kann die Reflektorschalenvorderseite auch kräftiger gereinigt oder berieben werden, ohne dass die Reflektorschicht Schaden nehmen würde.

Allerdings kommt es bei solchen rückseitig verspiegelten Reflektoren zu dem ungewollten Effekt, dass ein Teil des zu reflektierenden Lichts schon von der Vorderseite der Reflektorschale durch Oberflächenreflexion zurückgeworfen bzw. umgelenkt wird und hierdurch gar nicht erst in die transparente Schale eintreten und von der rückwärtigen Reflektorschicht umgelenkt werden kann. Der andere Teil des Lichts, der bestimmungsgemäß in die transparente Schale eintritt, von der reflektierenden Rückseite umgelenkt und an der Vorderseite der Reflektorschale wieder austritt, verlässt den Reflektor dabei oftmals in einer Richtung, die von dem an der Schalenoberfläche durch Oberflächenreflexion umgelenkten Lichtanteil divergiert. Die abweichenden Reflexionsrichtungen des oberflächenreflektierten Lichtanteils und des von der Reflektorschicht reflektierten Lichtanteils werden dabei oft von der Facettierung an der Rückseite der Reflektorschale verstärkt. Zudem kommt es bei einer facettierten Reflektorschicht an der Rückseite bisweilen auch zu dem ungewünschten Effekt, dass ein Teil der Facetten verschattet liegt und vom in die transparente Schalenschicht eintretenden Licht nicht erreicht werden kann, was sich in dunklen Stellen niederschlägt, die als Dunkelstellen-Muster ersichtlich sind, wenn in den Lichtkegel bzw. die Reflektorschale geblickt wird.

Hiervon ausgehend liegt der vorliegenden Erfindung die Aufgabe zugrunde, einen verbesserten Reflektor und eine verbesserte Leuchte mit einem solchen Reflektor zu schaffen, die Nachteile des Standes der Technik vermeiden und letzteren in vorteilhafter Weise weiterbilden. Insbesondere soll ein verbesserter Reflektor geschaffen werden, dessen Reflektorfläche trotz Facettierung einfach zu fertigen ist und stabil gegen mechanische und chemische Beanspruchungen wie beispielsweise bei der Reinigung ist, wobei der Reflektor gleichzeitig in lichttechnischer Hinsicht unerwünschte Beeinträchtigungen wie ein Dunkelstellen-Muster und ungewollt divergierende Reflexionsrichtungen weitgehend vermeiden kann.

Erfindungsgemäß wird die genannte Aufgabe durch einen Reflektor gemäß Anspruch 1 sowie eine Leuchte gemäß Anspruch 14 gelöst. Bevorzugte Ausgestaltungen der Erfindung sind Gegenstand der abhängigen Ansprüche.

Es wird also vorgeschlagen, die facettierte, reflektierend ausgebildete Reflektorfläche auf die Rückseite der Reflektorschale zu verlegen, die dem umzulenkenden Licht abgewandt ist und die Facetten dabei frontal auf die glatte Vorderseite auszurichten, die gleichzeitig die Lichteintritts- wie auch die Lichtaustrittsfläche des Reflektors bildet. Während bislang üblicherweise die reflektierenden Facetten auf der vom umzulenkenden Licht bestrahlten Seite der Reflektorschale angeordnet wurden, wird die facettierte Reflektorfläche auf der unbestrahlten, vom umzulenkenden Licht abgewandten Reflektorschalenseite vorgesehen. Erfindungsgemäß zeichnet sich der Reflektor dadurch aus, dass die Reflektorschale eine transparente Schalenschicht aufweist, die eine glatte, facettenfreie, der Lichtquelle zugewandte und/oder vom umzulenkenden Licht bestrahlte Vorderseite besitzt, die gleichzeitig eine Lichteintritts- und - austrittsfläche des Reflektors bildet, und auf ihrer gegenüberliegenden Rückseite mit der facettierten, reflektierend ausgebildeten Reflektorfläche versehen ist, deren Facetten mit Facettenhauptachsen zumindest im Wesentlichen senkrecht zur glatten Vorderseite ausgerichtet sind. Die Reflektorschale bzw. deren transparente Schalenschicht besitzt also voneinander abweichende, unterschiedlich konturierte Vorder- und Rückseiten, sodass die Schalenschicht im Schnitt betrachtet keine exakt gleichbleibende Wandstärke besitzt, sondern über jede Facette betrachtet dicker und dünner wird.

Insbesondere kann die dem umzulenkenden Licht zugewandte Schalenoberfläche harmonisch glatt gewölbt bzw. konturiert sein, während die Rückseite der harmonischen glatten Wölbung der Vorderseite nur bedingt folgt, da auf der genannten Rückseite die Vielzahl an Facetten die harmonisch glatte Konturierung durch viele Abflachungen bzw. Eindellungen überlagert, wobei die Facetten jedoch symmetrisch zu einer rückseitigen Hüllfläche des Reflektors ausgebildet und nicht verkippt sind, so dass keine treppenförmige Rückseitenkontur entsteht. Die vom Licht bestrahlte Vorderseite ist dabei zumindest überwiegend glatt, stetig und harmonisch gekrümmt, kann aber durchaus kleinere Fehlstellen, wie beispielsweise kleinere Ausnehmungen oder Vorsprünge zu Befestigungszwecken besitzen. Hiervon abgesehen ist sie jedoch vorteilhafterweise glatt und facettenfrei.

Das von der Reflektorschale umzulenkende Licht tritt an der glatten, harmonisch konturierten Vorderseite der transparenten Schalenschicht ein und durch diese hindurch, bis das Licht auf die auf der Rückseite vorgesehene, facettierte Reflektorfläche trifft und von dieser umgelenkt wird, dass das Licht wieder zurück von der reflektierend ausgebildeten Rückseite durch die transparente Schalenschicht hindurch und an der Vorderseite wieder austritt. Durch die Ausrichtung der Facetten mit ihrer Hauptachse in etwa senkrecht zur glatten Vorderseite kann vermieden werden, dass der von den Facetten reflektierte Lichtanteil nach Austritt aus der Reflektorschale in eine andere Richtung strahlt als der direkt an der Vorderseite oberflächenreflektierte Lichtanteil. Beide Lichtanteile strahlen hierdurch im Wesentlichen in dieselbe Richtung. Insbesondere strahlt jeweils der Bereich der Facette, der die gleiche Flächennormale hat wie die glatte Vorderseite, in die gleiche Richtung wie die glatte Vorderseite und der dort oberflächenreflektierte Lichtanteil. Je nach Ausbildung der Facette, die leicht konkav oder leicht konvex gewölbt sein kann, weitet der restliche Teil der Facette um deren zentralen Bereich herum das Licht in etwa symmetrisch um den zentralen Strahlungsanteil, der in die gleiche Richtung wie die glatte Vorderseite strahlt, auf, wodurch eine Homogenisierung und Durchmischung erzielt werden kann. Wenn die Facette insgesamt eben ausgebildet ist, was ebenfalls möglich ist, unterbleibt eine solche Aufweitung

Selbstverständlich kann es durch Fertigungstoleranzen, Verschmutzungen an der Oberfläche und ähnliche Unregelmäßigkeiten zu geringfügigen Abweichungen kommen. Überwiegende Teile des oberflächenreflektierten Lichts und des von den Reflektorfacetten reflektierten Lichts strahlen jedoch in dieselbe Richtung. Die genannten Hauptachsen der Facetten steht bei ebenen Facetten senkrecht auf die Facettenfläche und geht bei konkav oder konvex gewölbten Facetten senkrecht durch das Zentrum der Facette, wobei die genannte Hauptachse die Symmetrieachse der Facette bilden kann. Diese Hauptachse ist so ausgerichtet, dass sie zumindest näherungsweise, von kleinen fertigungstechnischen Toleranzen abgesehen, senkrecht auf die glatte Vorderseite der Reflektorschale ausgerichtet ist, wobei der Winkel zur glatten Vorderseite 90° +/-5° oder +/-3° oder +/-1° betragen kann.

Durch die Ausrichtung der Facetten mit ihren Hauptachsen etwa senkrecht auf die glatte Vorderseite fällt es auch leichter, die Facetten derart zu konfigurieren, dass das durch die transparente Schalenschicht auf die Facetten treffende Licht die Facetten jeweils vollständig bestrahlt. Durch eine solche strahlungsschattenfreie Ausbildung der Facetten können Dunkelstellen-Muster im reflektierten Lichtkegel, die beim Hineinblicken in den Reflektor sichtbar sind, vermieden und eine weitgehend gleichmäßige Lichtverteilung im Reflexionskegel erreicht werden. Die Facetten können insbesondere bezüglich des Lichts, das direkt von der Lichtquelle kommen kann und/oder erstmalig an der Vorderseite der Reflektorschale in deren transparente Schalenschicht eintritt, verschattungsfrei ausgebildet sein, so dass die Facettenflächen vollständig bestrahlt werden. Werden Facetten wie im Stand der Technik mit ihren Hauptachsen gegenüber der glatten Vorderseite zu stark verkippt und/oder an den Rändern zu stark konkav konturiert, werden Randabschnitte der Facetten von der Facettenkante bzw. der benachbart liegenden Facette verschattet, so dass kein Lichtstrahl auf diesen verschatteten Facettenabschnitt treffen und der Facettenabschnitt dementsprechend nicht lichttechnisch arbeiten kann, so dass es zu dem beschriebenen Dunkelstellen-Muster kommt.

Durch die Anordnung der reflektierenden Beschichtung bzw. Reflektorfläche auf der dem umzulenkenden Licht abgewandten Rückseite wird die Reflektorfläche nicht mehr berührt, wenn die dem umzulenkenden Licht zugewandte Vorderseite des Reflektors gereinigt wird. Insofern kann auch kräftiger an der Reflektorvorderseite gerieben werden, um dort ansitzenden Schmutz zu beseitigen. Die Reflektorfläche an sich braucht überhaupt nicht mehr gereinigt zu werden, da an der Rückseite anhaftender Schmutz nicht die Licht umlenkende Seite der Reflektorfläche beeinträchtigt. Die Licht umlenkende Reflektorfläche ist auf der transparenten Schalenschicht.

Vorteilhafterweise kann die reflektierend ausgebildete Reflektorschicht auf der Reflektorrückseite vor möglichen Beschädigungen durch eine darüber aufgebrachte Schutzschicht beispielsweise in Form einer Versiegelung geschützt werden. Beispielsweise kann die Reflektorfläche überlackiert werden oder durch eine Kunststoffbeschichtung umspritzt werden, wobei die Lackierung oder Umspritzung auch farbig oder allgemein opak ausgebildet sein kann, da die lichttechnisch wirksame Oberfläche der Reflexionsschicht auf der transparenten Schalenschicht liegt.

Die reflektierend ausgebildete Reflektorfläche kann grundsätzlich verschieden ausgebildet bzw. hergestellt werden. Beispielsweise kann die Reflektorfläche in Form einer spiegelnden oder reflektierenden, insbesondere hoch reflektierenden Beschichtung auf die genannte Rückseite der transparenten Schalenschicht aufgebracht werden.

Die transparente Schalenschicht kann aus verschiedenen transparenten Materialien aufgebaut sein. Beispielsweise kann die transparente Schalenschicht aus einem transparenten Kunststoff bestehen, beispielsweise spritzgegossen sein. Vorteilhafterweise können auch Kunststoffe Verwendung finden, auf denen reflektierende Beschichtungen an sich schlecht haften, was aber durch die vorgeschlagene Ausbildung keine Rolle spielt, da die reflektierend ausgebildete Reflektorfläche auf der Rückseite der Reflektorschale liegt.

Insbesondere kann die transparente Schalenschicht beispielsweise aus PC (Polycarbonat), PMMA (Polymethylmethacrylat), PMMI (Polymethacrylmethylimid), Polyester (OKP) oder Silikon oder auch aus Kombinationen dieser Materialien bestehen. Grundsätzlich kann die transparente Schalenschicht aber auch aus Glas aufgebaut sein.

Die transparente Schalenschicht kann insgesamt betrachtet eine dünnwandige Schale bilden, die - grob gesprochen - eine Wandstärke von beispielsweise einigen wenigen Millimetern oder auch nur Bruchteilen eines Millimeters aufweisen kann, wobei die Wandstärke an sich gleichbleibend über die Schalenkontur, durch die Facettierung jedoch in einem feinen Bereich variierend vorgesehen sein kann.

Die an der Licht abgewandten Reflektorseite vorgesehenen Facetten können grundsätzlich unterschiedlich konturiert sein, beispielsweise Abflachungen einer ansonsten konvex gewölbten Rückseite. Alternativ oder zusätzlich können die Facetten aber auch zur Licht abgewandten Schalenrückseite leicht vorspringende, konvexe Wölbungen der transparenten Schalenschicht sein, sodass die darauf aufgebrachte reflektierende Beschichtung und damit die zur Licht zugewandten Vorderseite hingewandte Reflektorfläche leicht konkav gewölbte Facetten besitzt. Alternativ können aber auch zur Reflektorrückseite hin konkav gewölbte Facetten vorgesehen sein, deren lichttechnisch aktive Vorderseite dementsprechend konvex gewölbt ist. Dabei sind auch Mischformen möglich, bei denen die Reflektorschale sowohl konvex gewölbte als auch konkav gewölbte und/oder glatte, ebene Facetten besitzt.

Die Facettenkrümmung kann dabei relativ klein beschaffen sein. Durch die zusätzliche Brechung an der glatten, transparenten Vorderseite der Reflektorschale kann auch bei geringeren Facettenkrümmungen eine größere Aufweitung erzielt werden. Mit der Brechung an der glatten transparenten Vorderseite ist die Brechung an der glatten Ein-/Austrittsfläche der transparenten Schalenschicht gemeint.

Vorteilhafterweise können an der Reflektorschale eine Vielzahl kleiner Facetten vorgesehen sein, beispielsweise mehr als 25 oder mehr als 50 oder auch mehr als 100 Facetten, die in mehreren übereinander - oder nebeneinander angeordneten Reihen von jeweils mindestens 10 Facetten nach Art einer gleichmäßigen Facetten-Matrix angeordnet sein können. Dabei können die Facetten im Wesentlichen spaltfrei und/oder stetig aneinander angrenzen, sodass die benachbarten Facetten lediglich durch einen gradförmigen Facettenrandbereich voneinander getrennt sind und die facettierte Reflektorfläche im Wesentlichen ausschließlich aus Facetten besteht.

Alternativ zu einer solchermaßen vollständig mit Facetten belegten Oberfläche können zwischen benachbarten Facetten aber auch Versatzflächen vorgesehen sein und/oder die benachbarten Facetten nicht direkt aneinander, Rand-an-Rand angrenzen. Solche zwischengeschalteten Versatzflächen zwischen den Facetten können hilfreich sein, um den Reflektor robuster zu machen und Beschädigungen an den Facettenrändern zu vermeiden.

Vorteilhafterweise ist die facettierte Reflektoroberfläche aber zumindest überwiegend mit Facetten belegt, so dass die genannten Zwischenversatzflächen nur einen kleinen Teil der facettierten Oberfläche ausmachen. Beispielsweise kann die facettierte Oberfläche zu mehr als 90% oder mehr als 95% aus Facetten bestehen und/oder zu weniger als 10% oder weniger als 5% aus dazwischenliegenden Versatzflächen bestehen.

Die genannten Facetten sind vorteilhafterweise im Verhältnis zur facettierten Oberfläche sehr klein. Beispielsweise kann die Fläche einer Facette weniger als 10% der insgesamt facettierten Oberfläche des Reflektors betragen, vorzugsweise auch weniger als 5%. In Weiterbildung der Erfindung kann die Fläche einer Facette etwa 1% bis 10% der facettierten Oberfläche des Reflektors betragen.

Beispielsweise können die Facetten Längs- und/oder Quererstreckungen von weniger als 10 oder auch weniger als 5 oder auch weniger als 2 Millimeter aufweisen. Je nach Größe des Reflektors können aber auch größere Facetten vorgesehen sein.

Vorteilhafterweise können alle Facetten im Wesentlichen dieselben Abmessungen aufweisen.

Alternativ können aber auch unterschiedlich große Facetten vorgesehen sein. Insbesondere können lichttechnisch kritischere Bereiche des Reflektors, die für den auszuleuchtenden Bereich besonders wichtig sind, mit einer feineren Facettierung versehen werden, als lichttechnisch weniger kritische Bereiche des Reflektors. Beispielsweise können die Facetten in lichttechnisch weniger kritischen Bereichen doppelt so groß oder fünfmal so groß oder auch zehnmal so groß wie die Facetten in den lichttechnisch kritischen Bereichen sein.

In Weiterbildung der Erfindung kann das Flächenverhältnis zwischen den Flächen der kleineren Facetten zu den Flächen der größeren Facetten im Bereich von 1:2 bis 1:10 liegen.

Der Reflektor kann beispielsweise verschiedene Reflektorabschnitte aufweisen, die mit jeweils einer facettierten Reflektorfläche versehen sind, wobei die Facetten in einem jeweiligen Reflektorabschnitt zumindest näherungsweise gleich konturiert sind, die Facetten in dem einen Reflektorabschnitt aber kleiner ausgebildet sind als in einem anderen Reflektorabschnitt. Insbesondere können die genannten, verschiedenen Reflektorabschnitte jeweils Ringabschnitte eines Reflektors bilden.

In Weiterbildung der Erfindung kann die transparente Schalenschicht auch dazu genutzt werden, an dem Reflektor einen Licht leitenden Abschnitt vorzusehen, in dem das in die transparente Schalenschicht eingeleitete Licht in dieser weitergeleiten, sodass beispielsweise ansonsten inaktive Reflektorflächen zu selbstleuchtenden Flächen gemacht werden können. Insbesondere kann ein Randabschnitt des Reflektors, der an die Lichtaustrittsseite des Reflektors angrenzt, einen solchen Licht leitenden Abschnitt bilden. Auch ein solcher Lichtleiterabschnitt des Reflektors kann auf der Licht abgewandten Rückseite mit einer Facettierung versehen sein, wobei die Facetten in diesem Lichtleiterabschnitt kleiner ausgebildet sein können als in einem benachbarten oder beabstandeten, reflektierend arbeitenden Reflektorabschnitt.

Das Licht kann dabei von einer Schmalseite her in die transparente Schicht eingekoppelt werden, wobei alternativ oder zusätzlich aber auch Licht über die glatte Vorderseite her eingekoppelt werden kann. Eine Auskopplung aus der transparenten Schicht, die durch das eingekoppelte Licht gekoppelt wird, kann über die Facetten oder über Oberflächenstreuung an der Rückseite der Reflektorschale erfolgen.

Die Erfindung wird nachfolgend anhand bevorzugter Ausführungsbeispiele und zugehöriger Zeichnungen näher erläutert. In den Zeichnungen zeigen:
- Fig. 1:: einen Längsschnitt durch eine Leuchte nach einer vorteilhaften Ausführung der Erfindung, deren Lichtquelle ein löffelförmig bzw. muschelförmig konturierter Reflektor zugeordnet ist, dessen dem umzulenkenden Licht abgewandte Rückseite mit einer facettierten, reflektierend ausgebildeten Reflektorfläche versehen ist,
- Fig. 2:: einen Längsschnitt durch die Leuchte ähnlich Figur 1, die einen Strahlengang durch die transparente Schalenschicht des Reflektors hindurch und die Umlenkung des Lichtstrahls an der rückseitigen Reflektorfläche zeigt,
- Fig. 3:: eine Schnittansicht einer Leuchte mit einem Reflektor nach einer vorteilhaften Ausführung der Erfindung, wobei der Reflektor mit einer Lichteintrittsöffnung um eine Lichtquelle herum angeordnet ist, eine Reflektorinnenseite dem umzulenkenden Licht zugeordnet ist, wobei die Licht abgewandte Reflektorschalenaußenseite facettiert und reflektierend ausgebildet ist,
- Fig. 4:: eine Schnittansicht der Leuchte ähnlich Figur 1, wobei der an der reflektierend ausgebildeten Reflektorfläche reflektierte Strahlengang sowie der an der Lichteintritts-/-austrittsfläche der transparenten Schalenschicht durch Brechung umgelenkte Lichtstrahl gezeigt ist,
- Fig. 5:: eine Schnittansicht einer Leuchte ähnlich den Figuren 1 und 2, wobei der Reflektor einen an den Lichtaustrittsquerschnitt des Reflektors angrenzenden Ringabschnitt aufweist, der als Lichtleiter wirkt und durch eine außenliegende Facettierung oder Oberflächenstrukturierung Licht nach außen strahlt,
- Fig. 6:: eine Schnittansicht mehrerer aneinandergesetzter Leuchten mit Reflektoren ähnlich Figur 3, wobei die leuchtenden, Licht leitenden Randabschnitte der einzelnen Reflektoren aneinandergrenzen,
- Fig. 7:: eine schematische Schnittansicht eines im Wesentlichen eben ausgebildeten Reflektors mit einer rückseitig angeordneten, facettierten Reflektorfläche als Beispiel für einen weiteren Reflektor,
- Fig. 8:: eine Schnittansicht einer Leuchte ähnlich Figur 1, wobei zusätzlich zu dem Reflektor eine Linse vorgesehen ist, die dem Reflektor vorgeschaltet ist, sodass der Reflektor nicht direkt Licht von der Lichtquelle einfängt, sondern von der Linse abgestrahltes Licht einfängt und umlenkt,
- Fig. 9:: eine Schnittansicht eines im Wesentlichen eben ausgebildeten Reflektors ähnlich Figur 7, wobei jedoch die rückseitigen Facetten anders als bei Figur 7 nicht zur Rückseite hin konvex, sondern konkav gewölbt sind, und
- Fig. 10:: eine Schnittansicht eines wiederum im Wesentlichen eben ausgebildeten Reflektors ähnlich den Figuren 7 und 9, wobei der Reflektor rückseitig angebrachte, konvex gewölbte Facetten aufweist, wobei eine über die seitlichen Schmalseiten erfolgende Lichteinkopplung in die lichtleitende Schicht des Reflektors dargestellt ist.

Wie die Figuren zeigen, kann die Leuchte 1 jeweils eine Lichtquelle 3 beispielsweise in Form einer LED oder eines LED-Clusters umfassen, wobei die Lichtquelle 3 beispielsweise auch auf einer Trägerplatte 4 montiert sein kann, die als Leiterplatte ausgebildet sein und/oder der Versorgung und/oder Steuerung der Lichtquelle 3 dienen kann. Wie die Figuren zeigen, kann auf der genannten Trägerplatte 4 auf der Lichtquelle 3 gegenüberliegenden Seite ein Kühlelement 5 montiert sein.

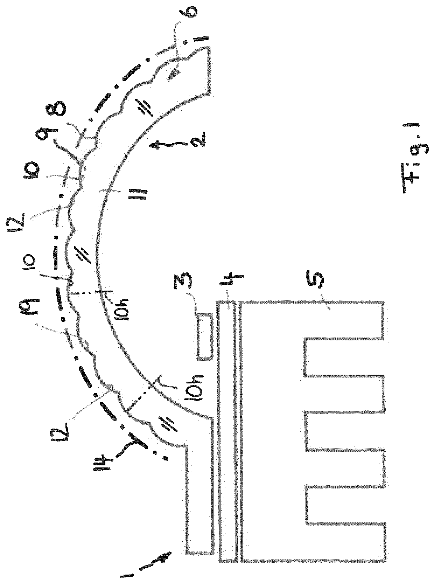

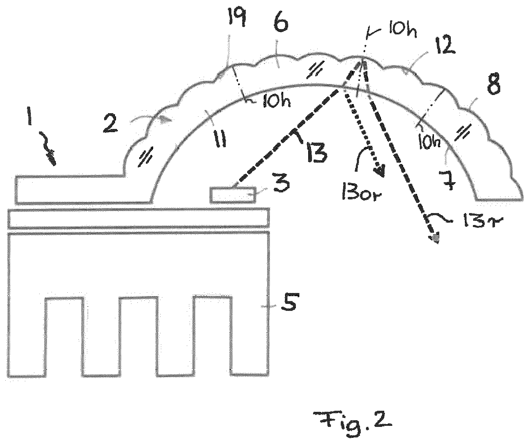

Wie die Figuren 1 und 2 zeigen, kann der Lichtquelle 3 ein löffel- oder muschelförmiger Reflektor 2 zugeordnet sein, der sich domartig über der Lichtquelle 3 wölben kann, um das von der Lichtquelle 3 abgestrahlte Licht umzulenken und abzustrahlen. Dabei kann der Reflektor 2 sich halbschalenförmig über die Lichtquelle 3 erstrecken, um deren abgestrahltes Licht vollständig einzufangen und umgelenkt abzustrahlen, auch wenn die Lichtquelle 3 ein Halbraumstrahler ist. Wie Figur 1 und 2 zeigen, kann die Lichtquelle 3 außermittig zu einer Seite des Reflektors 2 versetzt hin angeordnet sein.

Wie die Figuren 1 und 2 weiterhin zeigen, kann der Reflektor 2 ebenfalls auf der Trägerplatte 4 montiert sein.

Wie die Figuren 1 und 2 verdeutlichen, ist die der Lichtquelle 3 zugewandte und/oder vom umzulenkenden Licht bestrahlte Vorder- bzw. Innenseite der Reflektorschale 6 glatt, harmonisch gekrümmt ausgebildet, insbesondere mit der genannten muschelförmigen Haubenkonturierung. Die genannte Vorderseite 7 bildet gleichzeitig eine Lichteintrittsfläche und eine Lichtaustrittsfläche des Reflektors. Zumindest ein Teil des von der Lichtquelle 3 abgegebenen Lichts kann an der genannten Vorderseite 7 erstmalig in die Reflektorschale 6 eintreten. Der über die genannte Vorderseite 7 eintretende Lichtanteil bzw. das gesamte dort eintretende Licht kann insbesondere von der Lichtquelle 3 her kommendes, noch unreflektiertes Direktlicht sein. Grundsätzlich wäre es aber auch möglich, beispielsweise über einen Spiegel eine Vorabumlenkung des von der Lichtquelle 3 her kommenden Lichts vorzusehen und diese vom Spiegel umgelenkte Licht erstmalig an der Vorderseite 7 eintreten zu lassen.

Die der Lichtquelle 3 abgewandte Rückseite 8 ist abweichend von der Vorderseite 7 nicht glatt, harmonisch gekrümmt, sondern mit einer Facettierung 9 versehen. Die genannte Rückseite 8 ist dabei zwar insgesamt betrachtet ebenfalls muschelförmig konturiert, allerdings nicht mit einer glatten, harmonisch gewölbten Oberfläche, sondern durch die Vielzahl von Facetten 10 mit einer Vielzahl von Wölbungen bzw. Abflachungen versehen, die sich entlang der muschelförmigen Konturierung verteilt erstrecken

Wie die Figuren 1 und 2 zeigen, ist die Reflektorschale 6 dabei insgesamt dünnwandig ausgebildet, wobei die Wandstärke zwar - grob gesprochen - näherungsweise über die Reflektorschale gleichbleibt, allerdings durch die Facettierung 9 in einem kleineren Bereich Schwankungen aufweist, da die Konturierung der Rückseite 8 von der glatten Konturierung der Vorderseite 7 abweicht.

Die Reflektorschale 6 kann dabei eine transparente Schalenschicht 11 umfassen, die aus einem transparenten Kunststoff oder aus Glas geformt sein kann und in der genannten Weise die glatte, harmonisch konturierte Vorderseite 7 bildet bzw. besitzt und die facettierte Rückseite 8 besitzt.

Auf der facettierten Rückseite 8 des transparenten Schalenkorpus 11 ist eine spiegelnd oder reflektierend ausgebildete Reflektorschicht 12 aufgebracht, deren der transparenten Schalenschicht 11 zugewandte Innenseite das Licht umleitet.

Wie Figur 2 zeigt, tritt ein von der Lichtquelle 3 herkommender Lichtstrahl 13 an der glatten, harmonisch konturierten Vorder- bzw. Innenseite 7 der Reflektorschale 6 in den transparenten Schalenkorpus 11 ein und wird dabei durch Brechung abgelenkt. Der durch den transparenten Schalenkorpus 11 hindurchgehende Lichtstrahl 13 trifft sodann auf die Reflektorschicht 12 an der facettierten Rückseite 8 der transparenten Schalenschicht 11, welche Reflektorschicht 12 den Strahlengang reflektiert, sodass der Lichtstrahl 13 von der Rückseite 8 zurück durch die Schalenschicht 11 läuft und an deren Vorderseite 7 wieder aus der Schalenschicht 11 austritt, wobei wiederum nach dem Brechungsgesetz eine Ablenkung des Lichtstrahls erfolgt. Der aus der Vorderseite 7 wieder austretende, von der Reflektorschicht 12 zuvor reflektierte Lichtstrahl ist in den Figuren mit der Bezugsziffer 13r gekennzeichnet.

Wie Figur 2 weiterhin zeigt, wird ein Teil des Lichtstrahls je nach Auftreffwinkel auf die Vorderseite 7 durch Oberflächenreflexion zurückgeworfen. Vorteilhafterweise kann die glatte Vorderseite 7 auf die Konturierung der Facetten 10 derart abgestimmt sein, dass die durch Oberflächenreflexion zurückgeworfenen Lichtstrahlen 13 näherungsweise denselben Abstrahlwinkel besitzt wie der durch die Reflexionsschicht 12 zurückgeworfene Lichtstrahl, vgl. Figur 2. Der durch Oberflächenreflexion umgelenkte Lichtanteil ist mit der Bezugsziffer 13or gekennzeichnet.

Um näherungsweise gleiche Abstrahlwinkel des oberflächenreflektierten Strahls 13or und des von der Reflektorschicht 12 reflektierten Strahls 13r zu erzielen, sind die Facetten 10 vorteilhafterweise mit ihren Hauptachsen 10h zumindest im Wesentlichen senkrecht zur glatten Vorderseite 7 ausgerichtet, vgl. Fig. 1, Fig. 2.

Wie die strichlierte Linie 14 in Figur 1 andeutet, kann auf die rückseitige Reflektorschicht 12 eine Versiegelung beispielsweise in Form einer Lackschicht oder einer Kunststoffspritzschicht aufgebracht sein, um die Reflektorschicht 12 vor mechanischen und chemischen Belastungen und allgemein Umwelteinflüssen zu schützen.

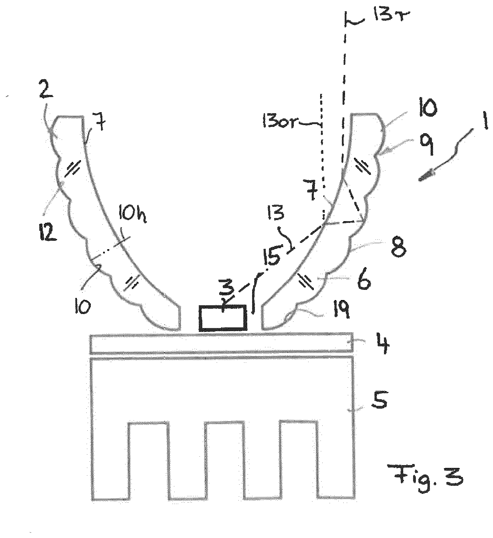

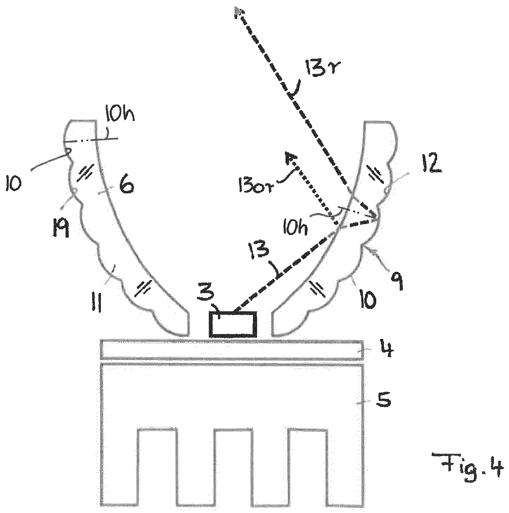

Wie die Figuren 3 und 4 zeigen, kann anstelle eines löffel- oder muschelförmigen Reflektors auch ein kelchförmiger, beispielsweise rotationssymmetrischer Reflektor 2 verwendet werden, der mit einer Lichteintrittsöffnung 15 um die Lichtquelle 3 herum auf die Trägerplatte 4 gesetzt sein kann.

Ähnlich dem Reflektor 2 aus den Figuren 1 und 2 ist auch dieser Reflektor 2 gemäß Figuren 3 und 4 mit einer glatten, harmonisch gekrümmten, in diesem Fall konkaven Vorder- bzw. Innenseite 7 versehen, die der Lichtquelle 3 zugewandt ist und/oder vom umzulenkenden Licht bestrahlt wird. Diese glatte Vorderseite 7 wird wiederum durch eine transparente Schalenschicht 11 beispielsweise aus Kunststoff gebildet, in die das umzulenkende Licht eintreten kann.

Die dem umzulenkenden Licht abgewandte Rückseite 8 ist ähnlich der Ausführung nach den Figuren 1 und 2 mit einer Facettierung 9 umfassend eine Vielzahl von Facetten 10 versehen, die in mehreren Reihen von beispielsweise mehr als 25 Facetten pro Reihe übereinander angeordnet sein können.

Wie Figur 4 zeigt, tritt hierbei der Großteil des von der Reflektorschale 6 eingefangenen Lichts durch die transparente Schalenschicht 11 hindurch und wird von der rückseitigen Reflektorschicht 12 zurückgespiegelt, sodass der entsprechende Lichtstrahl 13 wieder durch den transparenten Schalenkorpus 11 hindurchläuft und an dessen Vorder- bzw. Innenseite 7 wieder austritt. Ein kleinerer Teil des Lichts wird durch Oberflächenreflexion an der Lichteintritts-/-austrittsfläche, das heißt der Vorderseite 7 des transparenten Schalenkorpus 11 umgelenkt, vgl. Figur 4.

Vorteilhafterweise können die Facetten 10 auch bei der in den Figuren 3 und 4 gezeigten Reflektorkonturierung mit ihren Hauptachsen 10h zumindest näherungsweise senkrecht zur glatten Vorderseite 7 ausgerichtet sein, vgl. Fig. 3 und 4.

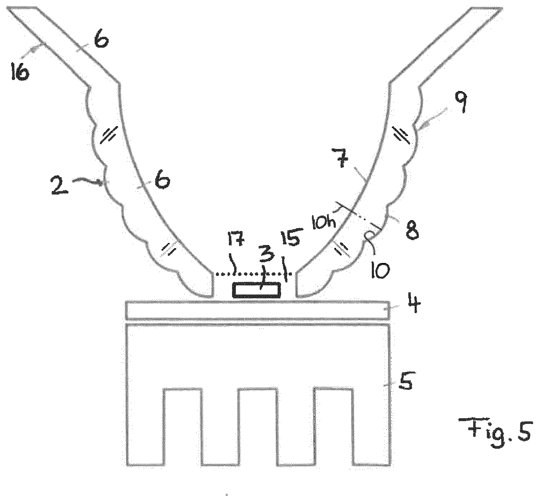

Wie Figur 5 zeigt, kann der an seiner Außen- bzw. Rückseite 8 facettierte Reflektor 2 auch einen Licht leitenden und damit selbstleuchtenden Schalenabschnitt umfassen. Der Licht leitende Reflektorschalenabschnitt 16 kann beispielsweise einen Reflektorkragen bilden und/oder einen Ringabschnitt an dem Lichtaustrittsquerschnitt des Reflektors 2 umfassen.

Der genannte Licht leitende Reflektorabschnitt 16 wird dabei von einem Abschnitt der transparenten Schalenschicht 11 gebildet, in der das eintretende Licht weitergeleitet wird. Dabei kann an einer Außen- oder Rückseite 8 des Licht leitenden Reflektorabschnitts 16 eine Oberflächenstruktur beispielsweise in Form einer Mikrofacettierung vorgesehen sein, um das im Reflektorabschnitt 16 weitergeleitete Licht diffus austreten zu lassen.

Grundsätzlich kann aber auch ein anderer Abschnitt des Reflektors 2 oder auch der ganze Reflektor 2 selbstleuchtend ausgebildet sein. Beispielsweise könnte auch an einem unteren bzw. an der Lichtquelle liegenden Randabschnitt des Reflektors 2 von der Lichtquelle her Licht eingeleitet werden, insbesondere an dem stirnseitigen Rand der Lichteintrittsöffnung, vgl. Fig. 5, so dass sich Licht durch den gesamten Reflektor hindurch ausbreitet. Dabei wäre es auch denkbar, an der rückseitigen Facettierung Aussparungen für einen Lichtaustritt vorzusehen, beispielsweise die eingangs beschriebenen Versatzflächenstücke zwischen einzelnen Facetten.

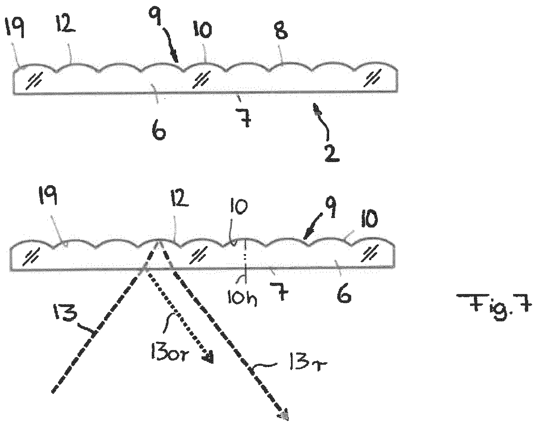

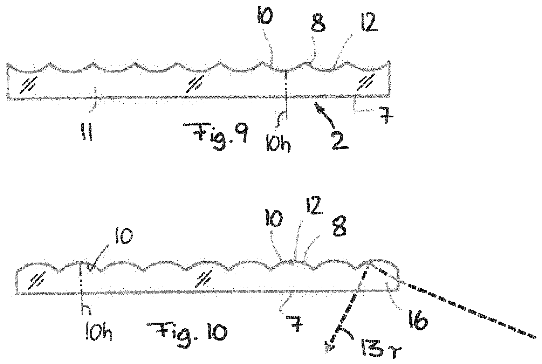

Eine seitliche, über die Schmalseite des Reflektors erfolgende Einkopplung des Lichts zeigt beispielsweise die Figur 10, wobei in diesem Fall der Reflektor 2 im Wesentlichen eben ausgebildet ist und an seiner Rückseite mit den schon beschriebenen Facetten 10 versehen ist. Insbesondere kann eine Lichtquelle seitlich am Reflektor angeordnet sein, sodass das von der Lichtquelle abgestrahlte Licht in die genannte Schmalseite eintritt. Alternativ oder zusätzlich kann das Licht aber auch über die glatte Vorderseite eingekoppelt werden, wie dies im Vergleich zur Figur 10 beispielsweise die Figur 7 zeigt.

Wie Figur 5 zeigt, kann an der Lichteintrittsöffnung 15 des Reflektors 2 ein Diffusor 17 vorgesehen sein.

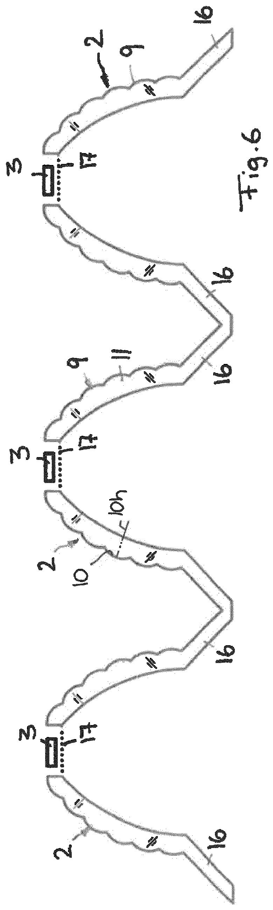

Figur 6 zeigt mehrere Reflektoren 2 mit jeweils einem Licht leitenden Reflektorabschnitt 16 gemäß Figur 5, wobei die mehreren Reflektoren 2 mit den genannten Licht leitenden Reflektorabschnitten 16 aneinander angrenzen bzw. nebeneinander angeordnet sind.

Wie die Figuren 5 und 6 zeigen, kann der Licht leitende Reflektorabschnitt 16 an seiner Innenseite ebenfalls glatt und harmonisch konturiert sein.

Die Facetten 10 sind dabei ebenfalls frontal der glatten Vorderseite 7 zugewandt und unverkippt ausgerichtet, d.h. mit ihren Hauptachsen 10h im Wesentlichen senkrecht zur glatten Vorderseite 7.

Der Reflektor 2 muss jedoch nicht schalen- bzw. muschelförmig gewölbt konturiert sein. Der Reflektor 2 kann auch eine zumindest abschnittsweise ebene Reflektorschale bzw. Reflektorkorpus besitzen, wie dies Figur 7 zeigt. Auch hier ist eine transparente Schalenschicht 11 beispielsweise aus transparentem Kunststoff vorgesehen, deren dem umzulenkenden Licht zugewandte Vorder- bzw. Innenseite 7 glatt und harmonisch konturiert ist, während die gegenüberliegende, rückseitige Oberfläche mit einer Facettierung 9 und einer darauf aufgebrachten Reflektorschicht 12 versehen ist.

Wie Figur 9 zeigt, können die an der Rückseite vorgesehenen Facetten 10 nicht nur konvex zur Rückseite vorspringen, sondern auch konkav zur Rückseite ausgebildet sein. Bei den in Figur 9 gezeigten, zur Rückseite hin konkaven Facetten 10 ist deren lichttechnisch aktive Vorderseite dementsprechend konvex gewölbt. Die Facetten 10 bilden in diesem Fall Eindrückungen in der Rückseite der Reflektorschale 6. Auch wenn Figur 9 die solchermaßen gewölbten Facetten an einem im Wesentlichen ebenen Reflektor zeigt, können solche Facetten auch an einer gewölbten, blumenkelchartigen Reflektorschale vorgesehen sein. Gleichermaßen können Mischformen mit konkav gewölbten und konvex gewölbten Facetten vorgesehen sein. Ferner können auch anders konturierte Facetten, beispielsweise im Wesentlichen ebene Facetten oder Mischformen mit konkav oder konvex gewölbten Rändern und flachen Zentrumsabschnitten vorgesehen sein.

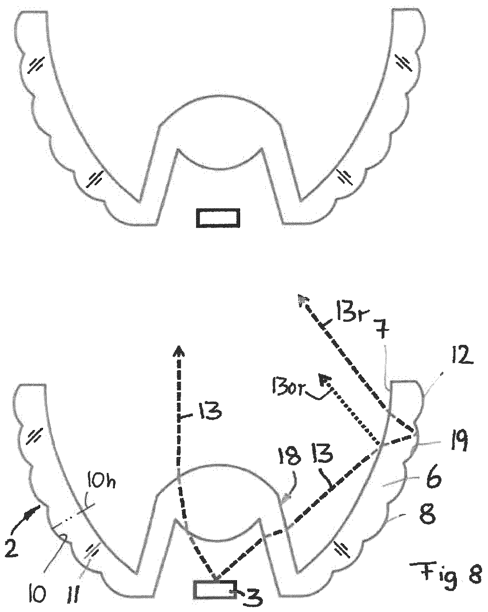

Wie Figur 8 zeigt, kann der Reflektor - insbesondere ein blumenkelchförmiger, rotationssymmetrischer Reflektor ähnlich den Figuren 3 bis 6, aber auch ein in anderer Weise, beispielsweise löffel- oder muschelförmiger Reflektor ähnlich den Figuren 1 und 2 - mit einem weiteren Optikelement beispielsweise in Form einer Linse 18 kombiniert werden, sodass die Leuchte 1 eine Hybridoptik umfassen kann. Beispielsweise kann ein das Licht der Lichtquelle 3 einfangende Linse 18 dem Reflektor 2 vorgeschaltet sein, sodass der Reflektor 2 nicht mehr direkt von der Lichtquelle 3 kommendes Licht einfängt, sondern von der genannten Linse 18 abgestrahltes Licht einfängt und umlenkt. Wie Figur 8 zeigt, kann auch in diesem Fall der Reflektor 2 eine transparente Schalenschicht 11 aufweisen, die eine glatte, harmonische Vorderseite 7 und eine mit einer Facettierung 9 versehene, gegenüberliegende Rückseite 8 aufweist.

Die Lichtquelle 3 kann direkt dem Reflektor 2 zugeordnet sein, so dass die Lichtquelle 3 und der Reflektor 2 zusammen eine Leuchte bzw. eine Leuchtenbaugruppe bilden. Alternativ oder zusätzlich ist es aber auch möglich, dass der Reflektor 2 von einer separaten Lichtquelle bzw. einem separaten Strahler mit einer Lichtquelle bestrahlt wird, um den vom Strahler abgegebenen Lichtkegel bzw. das entsprechende Lichtbündel zu reflektieren.

## Patentansprüche

1. Reflektor für eine Leuchte (1), mit einer Reflektorschale (6) zum Umlenken des von einer Lichtquelle (3) der Leuchte (1) abgegebenen Lichts, wobei die Reflektorschale (6) eine facettierte, reflektierend ausgebildete Reflektorfläche (19) aufweist, **dadurch gekennzeichnet, dass** die Reflektorschale (6) eine transparente Schalenschicht (11) aufweist, die eine glatte, facettenfreie, der Lichtquelle (3) zugewandte und/oder vom umzulenkenden Licht bestrahlte Vorderseite (7) besitzt, die gleichzeitig eine Lichteintritts- und -austrittsfläche des Reflektors bildet, und auf ihrer gegenüberliegenden Rückseite (8) mit der facettierten, reflektierend ausgebildeten Reflektorfläche (19) versehen ist, deren Facetten mit Facettenhauptachsen (9a) zumindest im Wesentlichen senkrecht zur glatten Vorderseite (7) ausgerichtet sind.

2. Reflektor nach dem vorhergehenden Anspruch, wobei die Facetten (10) derart konturiert und an die glatte Vorderseite (7) angepasst sind, dass das bestimmungsgemäß in die Reflektorschale eintretende Licht der Lichtquelle (3) die Facetten (10) vollständig bestrahlt.

3. Reflektor nach einem der vorhergehenden Ansprüche, wobei die transparente Schalenschicht (11) einen dünnwandigen Schalenkorpus mit näherungsweise gleichbleibender, durch die Facettierung (9) leicht variierender Wandstärke bildet.

4. Reflektor nach einem der vorhergehenden Ansprüche, wobei die facettierte Rückseite (8) mehrere, nebeneinanderliegende Reihen von jeweils mehr als 10 Facetten (10) aufweist und/oder im Wesentlichen vollständig mit einem matrixartigen Facettenmuster bedeckt ist, wobei die facettierte Rückseite (8) mehr als 50 oder mehr als 100 Facetten aufweist.

5. Reflektor nach einem der vorhergehenden Ansprüche, wobei die Facetten (10) jeweils eine Facettenfläche besitzen, die weniger als 20% oder weniger als 10%, insbesondere etwa 1% bis 10% der Gesamtfläche der Facettierung und/oder der facettierten Reflektorfläche beträgt und/oder einen Durchmesser oder eine Quer- oder Längserstreckung besitzt, der/die weniger als 20 Millimeter oder weniger als 10 Millimeter oder weniger als 5 Millimeter oder weniger als 1 Millimeter beträgt.

6. Reflektor nach einem der vorhergehenden Ansprüche, wobei die Facetten (10) unterschiedlich große Facetten umfassen, wobei das Flächenverhältnis der Fläche kleiner Facetten zur Fläche großer Facetten im Bereich von 1:2 bis 1:10 beträgt.

7. Reflektor nach einem der vorhergehenden Ansprüche, wobei die Facetten (10) an der Rückseite (8) der Reflektorschale (6) von der genannten Rückseite (8) konvex vorspringende und/oder konkav eingedrückte Wölbungen bilden.

8. Reflektor nach einem der vorhergehenden Ansprüche, wobei die transparente Schalenschicht (11) auf ihrer Rückseite (8) mit einer spiegelnden oder reflektierenden Reflexionsschicht beschichtet ist, deren auf der Oberfläche des transparenten Schalenschicht (11) sitzende Oberfläche die Reflektorfläche (19) bildet.

9. Reflektor nach einem der vorhergehenden Ansprüche, wobei die Reflektorfläche (12) an ihrer Außenseite, die der transparenten Schalenschicht abgewandt ist, mit einer Beschichtung (14), insbesondere einer Lackierung oder einer Spritzschutzschicht, beschichtet ist, wobei die genannte Beschichtung (14) lichtundurchlässig ist.

10. Reflektor nach einem der vorhergehenden Ansprüche, wobei die transparente Schalenschicht (11) aus einem transparenten Kunststoff ausgewählt aus der Gruppe umfassend Polycarbonat (PC), Polymethylmethacrylat (PMMA), Polymethacrylmethylimid (PMMI), Polyester (OKP) und Silikon besteht.

11. Reflektor nach einem der vorhergehenden Ansprüche, wobei zumindest ein Reflektorabschnitt (16) als Lichtleiter ausgebildet ist.

12. Reflektor nach dem vorhergehenden Anspruch, wobei der genannte Reflektorabschnitt (16), der als Lichtleiter ausgebildet ist, mit einer einen diffusen Lichtaustritt unterstützenden Oberflächenstrukturierung, insbesondere einer Mikrofacettierung, versehen ist, wobei der als Lichtleiter ausgebildete Reflektorabschnitt (16) einen Reflektorkragen bildet und/oder einen an den Lichtaustrittsquerschnitt angrenzenden Ringabschnitt bildet.

13. Hybridoptik mit einem Reflektor (2), der gemäß einem der vorhergehenden Ansprüche ausgebildet ist, sowie einer Linse (18), die im Bereich einer Lichteintrittsöffnung (13) oder einer Lichtaustrittsöffnung des Reflektors (2) integral einstückig an die transparente Schalenschicht (11) des Reflektors (2) angeformt ist.

14. Leuchte mit einem Reflektor (2), der gemäß einem der Ansprüche 1 bis 12 ausgebildet ist, oder einer Hybridoptik, die gemäß Anspruch 13 ausgebildet ist, sowie mit zumindest einer Lichtquelle (3), deren Licht zumindest teilweise an der die Lichteintritts- und -austrittsfläche bildenden, glatten Vorderseite (7) des Reflektors (2) in die Reflektorschale (6) eintritt.
